# EUROPEAN PATENT SPECIFICATION

(11) **EP 2 636 387 B1**
(45) Date of publication and mention of the grant of the patent: **24.05.2017**
(21) Application number: 13001129.9
(22) Date of filing: 04.03.2013
(51) Int. Cl.: A61C 8/00

(54) **Complex for improved dental prostheses suitable for eliminating any possible bacterial presence therein**
Set für verbesserte Zahnprothesen, die zur Beseitigung von möglicherweise darin vorhandenen Bakterien geeignet sind
Kit pour prothèses dentaires améliorées approprié pour éliminer toute présence bactérienne possible

(30) Priority: 05.03.2012 IT BG20120011
(43) Date of publication of application: 11.09.2013
(73) Proprietor: Assenza, Bartolomeo, 20862 Arcore (Monza Brianza) (IT)
(72) Inventor: Assenza, Bartolomeo, 20862 Arcore (Monza Brianza) (IT)
(74) Representative: Lecce, Giovanni

(56) References cited:
- EP-A2- 1 776 932
- WO-A1-2005/044133
- WO-A1-2011/138029
- US-A- 5 015 186
- US-A1- 2006 121 417
- US-A1- 2007 254 265
- US-A1- 2011 311 947

## Description

The present invention relates to a improved dental prosthetisation complex suitable for eliminating bacterial presence therein.

More specifically, the present invention relates to an improved dental prosthetisation complex in which the passage of bacteria from the oral cavity towards the inner cavities is prevented so as to prevent the onset of systemic diseases which could originate from such presence.

As is known, dental implants are currently a common and widespread treatment for the replacement of missing teeth; over the years multiple and different types of dental implants have been developed characterised by a careful study of the constituent materials and components so as to ensure an optimal useful life, hygienic safety for the patient treated, increased aesthetic characteristics etc.

Such implants, typically made from titanium, are generally provided with a threading along the outer lateral surface or with equivalent means of retention suitable for permitting the stabilisation of the implant in the bone, with complementary or subtractive surface treatments tending to stimulate growth factors and permit the osseointegration of the bone and implant to be achieved, a fundamental and essential factor for successful recovery.

The application of the dental implant to the mandibular or maxillary bone avails of various techniques and normally leads to the positioning of the implant at the level of the bone crest and thus under the gum. Subsequently or simultaneously, the dentist commences the connection step by applying an element known as a "pillar", "stump" or "abutment" to the implant, which crosses the gum and emerges in the oral cavity to provide a support for the false tooth or more complex structures formed of groups of two or more teeth constituting so-called "bridges" or the like.

Said stumps rest on the platform of the dental implant, to which they are typically connected and joined by means of a through screw.

Such solution is not without significant drawbacks inasmuch as based on mobile couplings between the parts, where the joining element (the screw) may be subject to loosening caused by dynamic loads developing in the oral cavity during chewing, swallowing or speech and thus such as to be able to cause mobility between the parts.

This mobility, or more generally, the presence of clearance between the parts may lead to disadvantages of a hygienic nature, in that the crevices created represent an easy point of entrance for bacteria and for their proliferation inside the residual cavities of the implant.

The modifications and construction improvements made over the years to screws and stumps as well as to the screwing methods have not however resolved the problems of mobility and consequent penetration and proliferation of bacteria, with the consequent related drawbacks.

The problems caused by the formation of colonies of bacteria are numerous and considerable and range from halitosis to the much more serious peri-implantitis, the bacterial strains of which can generate infections, disease, and complications at a systemic level potentially resulting in problems such as cardiovascular disease, premature birth in the case of pregnant women, etc

In particular, the earlier patent WO 2005/044133 A1, describes a dental prosthetisation implant in which the transmucous portion is a single body with the dental implant, thus not customisable to the anatomy of the patient, while the stump is inserted separately with a cone type coupling which does not exclude the possibility of bacteria and organic fluids seeping inside the implant, depositing on the inside of empty spaces and proliferating with consequent injury to the health of the patient and the need for important recovery and restoration operations.

The patent US 2011/311947 A1 describes a dental implant for a prosthetic device emphasising the use of ceramic materials of varying hardness in which the stump or "abutment" is inserted in the dental implant which is in contact with the mandibular or maxillary bone, and said stump has a through supply hole of sealant, extending in the central part of said stump and all along its length.

The transmucous part is pre-assembled in the implant and is not a separate element which the dentist may choose depending on the anatomy of the patient. In this case also, the seeping of organic fluids and bacteria into the contact part between the stump and the dental implant with consequent deposit and proliferation of the bacteria and injury to the patient's health is not excluded.

The purpose of the present invention is to provide an improved dental prosthetisation complex, which makes it possible to form a stable connection between the components in which micro gaps and residual spaces are contemporarily eliminated so as to prevent the passage and proliferation of bacteria, and consequently, the onset of hygiene and health complications as above.

A further purpose of the present invention is to provide a dental prosthetisation complex comprising a set of components easy to assemble to one another as well as easily applicable to the patient.

A further purpose of the present invention is to provide a dental prosthetisation complex which is highly flexible as regards the possibility of adapting to the anatomy and various clinical situations of the patient.

A further purpose of the present invention is to provide a dental prosthetisation complex able to guarantee a high level of reliability over time, eliminating any need for further intervention as a result of loosening of the components joined by screws.

A further purpose of the present invention is to provide a dental prosthetisation complex such as to be easily and economically made, by means of a simplification of prosthetic procedures and the reduction of treatment times.

These and other purposes are achieved by the dental prosthetisation complex of the present invention, according to the main claim.

The construction and functional characteristics of the dental prosthetisation complex of the present invention will be more clearly comprehensible from the detailed description below in which reference is made to the appended drawings which show a preferred and non-limiting embodiment and wherein:
figure 1 shows a view in partial cross-section in a longitudinal direction and partially exploded of a dental implant of the complex which the invention relates to;
figure 2 shows a further schematic view in partial longitudinal cross-section of the dental implant of the invention;
figure 3 shows a partial longitudinal cross-section of all the components composing the dental prosthetisation complex, inclusive of the prosthetic elements.

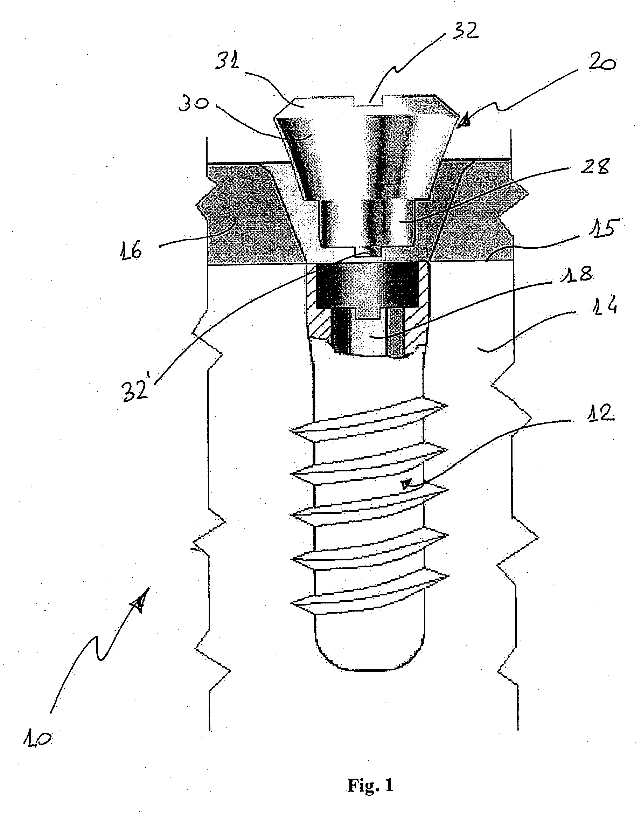

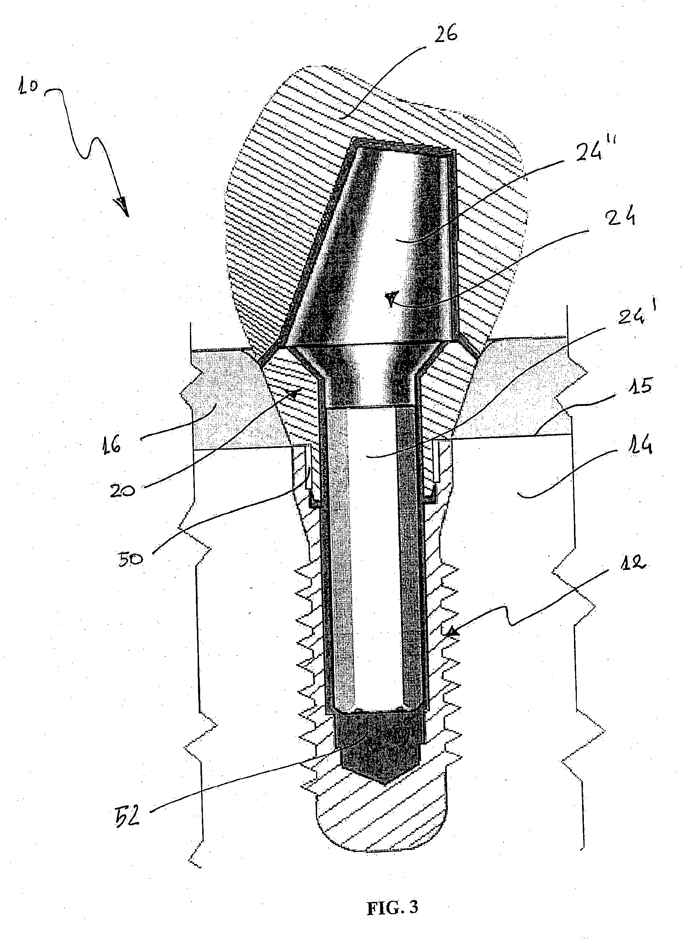

With reference to the aforesaid figures, the improved dental prosthetisation complex suitable for eliminating bacterial presence therein according to the present invention, globally denoted by reference numeral 10 in figures 1 and 3 comprises a dental implant 12 suitable for osseintegration made from titanium or another biocompatible material, adapted to be permanently inserted in the mandibular or maxillary bone 14 normally as far as the level of the bone crest 15 and provided axially with a blind hole 18, variously dimensioned and configured, suitable for permitting the housing by interference, at an annular portion 50, of a transmucous collar 20.

The blind hole 18 of the implant 12 has a circular cross-section which is constant or with differentiated diameters or, in alternative embodiments, has a polygonal cross-section or cross-section with different geometrical forms or is provided with hollows and/or inserts suitable for defining guides for a correct positioning and coupling of the transmucous collar 20 and/or of a stump 24 inserted and stabilised in relation to said blind hole 18 as explained in detail below.

The transmucous collar 20, which axially prolongs the dental implant through the thickness of the gum 16, is axially coupled to the dental implant (12) in the blind hole 18; said collar 20 is made from titanium or from titanium coated in a layer of zirconium or from zirconium for improved aesthetic impact (to prevent that even a small portion of titanium of said collar in titanium may be visible as a result of receding of the gums or in the case of "transparency" related to a thin gum). The transmucous collar is axially provided with a through hole 22, to permit the insertion of the stump 24.

The lower portion 24' of the stump 24 couples to the blind hole 18 of the dental implant 12 through the through hole 22 of the transmucous collar 20 and is provided with a part which emerges 24" in relation to the gum tissue 16 suitable for supporting a false tooth or crown 26 or other prosthetic structure (such as groups of two or more teeth constituting a "bridge").

The different morphologies which the constituent elements may assume have the purpose of achieving maximum functionality of the complex and of adapting to the anatomical characteristics and peculiarities of each patient.

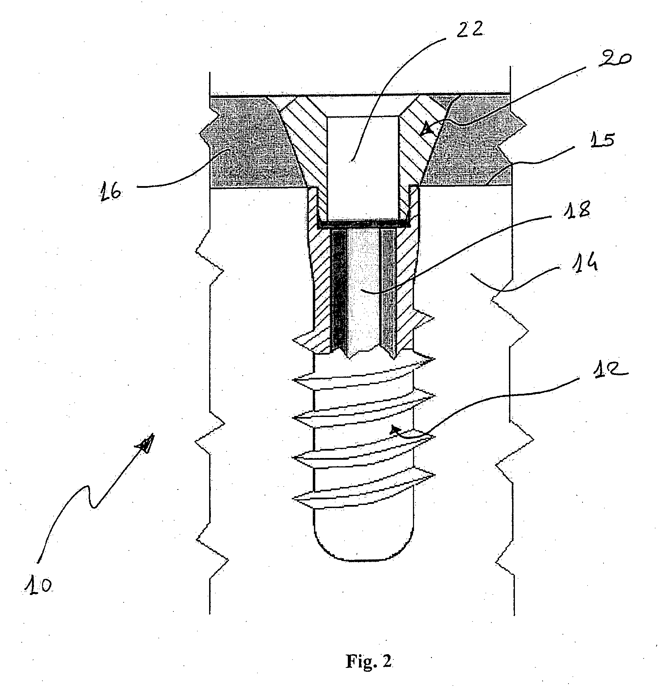

With particular reference to the preferred embodiment as in figure 2, the transmucous collar 20 has a lower portion 28 suitable for being inserting with interference, at said annular portion 50, in said blind hole 18 of the dental implant 12 and an upper portion or transmucous portion 30 in contact with the gum which, starting from the upper face of the lower portion 28, extends in a vertical direction assuming different morphologies so as to adapt to the anatomy of the patient and to the dimensions of the tooth to be prosthetised; by way of example, the transmucous portion 30 may have a longitudinal extension having a constant cross-section or with different cross-sections connected by an inflection point or joined up or, again, a truncated-cone or concave-convex extension.

The upper rim 31 or shoulder of said transmucous portion 30 is shaped differently according to the anatomy of the patient and the dimensions of the tooth to be prosthetised; the shaping of said upper rim 31 may be defined by a flat or curved chamfer or may have a constant cross-section.

With particular reference to the preferred embodiment, the transmucous collar 20 may have notches, shapings, appendages or references 32 and 32', extending respectively starting from the upper face of the shoulder 31 and from the lower face of the lower portion 28 and suitable for constituting anti-rotational elements and/or facilitating the reciprocal positioning/repositioning of the collar 20 in relation to the platform/surface of the dental implant 12 and to the stump 24, if fitted with analogous reference elements.

The contact surfaces between the transmucous collar 20 and the platform of the implant 12, normally flat and orthogonal to the axis of the implant, may be inclined or assume different morphologies.

In alternative embodiments, the transmucous collar 20 may have a lower portion 28 which is not just cylindrical but which is composed of one or more differentiated cross-sections; in particular, the lower portion 28 may have a hexagonal or octagonal cross section or another polygonal type cross-section.

Moreover, the through hole 22 itself of the transmucous collar 20 may have one or more cross-sections having a circular and/or polygonal geometry as well as threadings or other repositioning elements or elements functional to the application.

According to further alternative embodiments, the transmucous collar 20 may have the emerging part 24" of the stump 24 already integral with and joined to said transmucous collar.

The dimensions of the lower portion 28 of the transmucous collar 20 and of the annular portion 50, coaxial to the blind hole 18, of the dental implant 12 designed for coupling, are such as to permit a clutch or interference type connection between the aforementioned elements; said connection defined as "press fitting" is materialised at said annular portion 50.

Equally, the transversal dimensions of the through hole 22 of the transmucous collar 20 are greater than those of the lower portion 24' of the stump 24 so as to define a meatus suitable for assuring the free passage and positioning of the stump in relation to the transmucous collar and to the implant 12 as well as enabling the introduction of a cement 52 as an attachment and sealing element.

The stabilisation of the complex is schematised in figure 3 where the connection by interference between the transmucous collar 20 and the dental implant 12 at the annular portion 50, and the presence of the layer of cement 52 joining the stump 24 to the implant 12 through the transmucous collar 20, filling all the empty crevices present inside the holes of the transmucous collar 20 and the blind hole of the implant 12 , are shown; such empty spaces are potentially dangerous inasmuch as possibly constituting a route for the penetration and subsequent proliferation of bacteria.

The same cement 52 is used to stabilise the false tooth or crown 26 in relation to the stump 24 and to the transmucous collar 20.

As may be seen from the above, the advantages which the dental prosthetisation complex of the present invention achieves are evident.

The improved dental prosthetisation complex of the present invention is impenetrable to bacteria and advantageously permits a rigid connection free of moving parts to be achieved between the components constituting the implant, excluding the presence of micro cavities and residual inner spaces between said components so as to prevent the penetration and proliferation of bacteria and, consequently, the onset of possible infections , hygienic and/or health complications injurious not just to dental health but to the entire body.

A further advantage is represented by the fact that the connection method, implemented without the use of screws or pins , to the transmucous collar 20 stabilised in the implant 12 by interference and the stump 24 stabilised in relation to the implant 12 and to the transmucous collar 20 by cement 52, defines a monolithic complex such as to ensure an optimal and maximum resistance to the reciprocal loosening of the parts ( thereby avoiding the so-called "pump effect", such as to cause a transfer of fluids inside the cavity of the implant with the consequent danger of proliferation of bacterial colonies) and the total absence of residual spaces.

Of further advantage is the fact that the constituent components of the prosthetisation complex of the invention permit an assembly with anti-rotational constraints and are such as to facilitate the positioning/ repositioning between said parts.

A further advantage of the dental prosthetisation complex which the invention relates to is represented by the fact of being composed of a set of components which are easy to assemble and to apply to the patient.

A further advantage is the fact that the dental prosthetisation complex which the invention relates to is highly flexible and easily adaptable to the different application configurations dictated by the specific needs of the patient, both aesthetic and anatomical, thanks to the presence of the transmucous collar made in different shapes, dimensions, directions and materials depending on specific requirements.

The advantageous and surprising characteristics of the dental prosthetisation complex which the invention relates to are further confirmed by the results of experiments confirming the advantages deriving from the structural and functional characteristics described in detail above.

Despite the invention having been described above with particular reference to one of its preferred and non-limiting embodiments, numerous modifications and variants will appear evident to a person skilled in the art in the light of the above description. The present invention therefore sets out to embrace all the modifications and variants which fall within the scope of the following claims.

## Claims

1. An improved dental prosthetisation complex (10) suitable for eliminating the bacterial presence therein comprising:
- a dental implant (12) suitable for osseintegration, made from titanium or another biocompatible material, adapted to be permanently inserted in the mandibular or maxillary bone (14) normally as far as the level of the bone crest (15) and provided axially with a blind hole (18),
- a transmucous collar (20), which axially prolongs the dental implant through the thickness of the gum (16), adapted to be axially coupled to the dental implant (12) in the blind hole (18) and provided axially with a through hole (22),
- a stump (24) adapted to be axially coupled to the blind hole (18) of the dental implant (12) through the through hole (22) of the transmucous collar (20) and provided with a part emerging (24") in relation to the gum tissue (16) suitable for providing support to an artificial crown (26) or other prosthetic structure
wherein the transmucous collar (20) is adapted to be axially coupled to said dental implant (12) previously attached with mechanical interference at an annular portion (50), defined between the upper part of the dental implant (12) and the lower portion (28) of the transmucous collar (20), and wherein the stump (24) is adapted to be subsequently inserted in the blind hole (18) of the implant (12) starting from the through hole (22) of the transmucous collar (20) to form a monolithic complex which is adapted to be mechanically and chemically sealed and stabilised by a cement (52) which can be positioned around the entire lower portion (24') of the stump (24), inserted in said holes (22) and (18), and which can entirely fill the cavities formed between said lower portion (24') and the bottom of the blind hole (18) and axially prolonged at least as far as the through hole (22) of the transmucous collar (20), forming a complex impenetrable to organic fluids and bacteria.

2. The dental prosthetisation complex according to claim 1, **characterised in that** the blind hole (18) of the dental implant (12) is provided with one or more hollows extending in an axial direction.

3. The dental prosthetisation complex according to the previous claim, **characterised in that** the blind hole (18) of the dental implant (12) has a polygonal cross-section extending partially or for the entire length of said hole.

4. The dental prosthetisation complex according to claim 1, **characterised in that** in the transmucous collar (20), made from titanium, titanium coated in zirconium or from zirconium, the lower portion (28) has a circular or polygonal cross-section suitable for being inserted in an axial blind hole (18) of the dental implant (12), and an upper portion or transmucous portion (30) extending in a vertical direction starting from the upper face of the lower portion (28) and tendentially has a longitudinal extension with a constant cross-section or differentiated cross-sections connected by an inflection point or joined, or a truncated-cone or concave-convex extension. said transmucous collar (20) further comprising an upper rim (31) or shoulder of said transmucous portion (30) with a shaping having a flat, curved or constant cross-section chamfer and said through hole (22) which has a circular, polygonal or mixed cross-section for the insertion /coupling to the stump (24).

5. The dental prosthetisation complex according to claim 4, **characterised in that** the transmucous collar (20) has variable dimensions depending on the anatomy and on the tooth to be prosthetised and has notches, appendages, shapings or references (32, 32') extending respectively starting from the upper face of the shoulder (31) and from the lower face of the lower portion (28) and suitable for constituting anti-rotational and reciprocal positioning/repositioning elements of the collar (20) in relation to the platform/surface of the dental implant (12) and to the stump (24).

6. The dental prosthetisation complex according to claim 4, **characterised in that** the hole or aperture (22) of the transmucous collar (20) has one or more sections either provided with threadings or repositioning elements.

7. The dental prosthetisation complex according to claim 1, **characterised in that** the transmucous collar (20) has the emerging part (24") of the stump (24) integrated so as to define a single body with said transmucous collar.

## Patentansprüche

1. Verbesserter dentaler Prothesenkomplex (10), der zur Beseitigung der bakteriellen Anwesenheit darin geeignet ist, umfassend:
- ein für die Osseintegration geeignetes Dentalimplantat (12), das aus Titan oder einem anderen biokompatiblen Material hergestellt ist, welches eingerichtet ist, dauerhaft in den Unterkiefer- oder Oberkieferknochen (14) normalerweise soweit wie das Niveau des Knochenkamms (15) eingesetzt zu sein und axial mit einem Sackloch (18) versehen ist,
- einen transmukösen Kragen (20), der das Dentalimplantat axial durch die Dicke des Zahnfleischs (16) verlängert, eingerichtet ist, axial mit dem Dentalimplantat (12) gekoppelt zu werden in der Sacklochbohrung (18) angeordnet und axial mit einem Durchgangsloch (22) versehen ist,
- einen Stumpf (24), der eingerichtet ist, mit dem Sackloch (18) des Dentalimplantats (12) durch das Durchgangsloch (22) des transmukösen Kragens (20) axial gekoppelt zu sein und mit einem Teil (24") versehen ist, der in Bezug auf das Gewebe des Zahnfleisches (16) hervortritt, der zur Bereitstellung einer Unterstützung einer künstlichen Krone (26) oder einer anderen prothetischen Struktur geeignet ist,
wobei der transmuköse Kragen (20) eingerichtet ist, axial mit dem Dentalimplantat (12) gekoppelt zu sein, das zuvor mit mechanischer Interferenz an einem ringförmigen Abschnitt (50) angefügt ist, welcher zwischen dem oberen Abschnitt des Dentalimplantats (12) und dem unteren Abschnitt (28) des transmukösen Kragens (20) begrenzt ist, und wobei der Stupf (24) eingerichtet ist, anschließend in das Sackloch (18) des Implantats (12) ausgehend von dem Durchgangsloch (22) des transmukösen Kragens (20) eingefügt zu werden, um einen monolithischen Komplex zu bilden, der eingerichtet ist, durch einen Zement (52) mechanisch und chemisch abgedichtet und stabilisiert zu werden, der um den gesamten unteren Abschnitt (24 ') des in die Löcher (22) und (18) eingesetzten Stumpfs (24) angeordnet werden kann, und die zwischen dem unteren Abschnitt (24') und dem Boden des Sacklochs (18) gebildeten Hohlräume vollständig füllt, und zumindest bis zum Durchgangsloch (22) des transmukösen Kragens (20) axial verlängert ist, und einen für organische Flüssigkeiten und Bakterien undurchdringbaren Komplex bildet.

2. Dentalprothesenkomplex nach Anspruch 1, **dadurch gekennzeichnet, dass** das Sackloch (18) des Dentalimplantats (12) mit einem oder mehreren sich in axialer Richtung erstreckenden Hohlräumen versehen ist.

3. Dentalprothesenkomplex nach dem vorhergehenden Anspruch, **dadurch gekennzeichnet, dass** das Sackloch (18) des Dentalimplantats (12) einen polygonalen Querschnitt aufweist, der sich teilweise oder für die gesamte Länge des Lochs erstreckt.

4. Dentalprothesenkomplex nach Anspruch 1, **dadurch gekennzeichnet, dass** in dem transmukösen Kragen (20), der hergestellt ist aus Titan, in Zirkonium beschichtetem Titan oder aus Zirkonium, der untere Abschnitt (28) einen kreisförmigen oder polygonalen Querschnitt aufweist, der zum Einsetzen in ein axialen Sackloch (18) des Dentalimplantats (12) geeignet ist, und ein oberer Abschnitt oder transmuköser Abschnitt (30), der sich von der Oberseite des unteren Abschnitts (28) ausgehend vertikal erstreckt und sich tendenziell in Längsrichtung erstreckt mit konstantem Querschnitt oder differenzierten Querschnitten, durch einen Wendepunkt angeschlossen oder verbunden, oder mit einer kegelstumpfförmigen oder konkav-konvexen Erweiterung, wobei der transmukösen Kragen (20) ferner einen oberen Rand (31) oder eine Schulter des transmukösen Abschnitts (30) mit einer Formgebung mit einer flachen, gekrümmten oder konstanten Querschnittsfase und dem Durchgangsloch (22) aufweist, das einen kreisförmigen, polygonalen Querschnitt oder Mischquerschnitt aufweist zum Einsetzen / kuppeln an den Stumpf (24).

5. Zahnprothesenkomplex nach Anspruch 4, **dadurch gekennzeichnet, dass** der transmuköse Kragen (20) in Abhängigkeit von der Anatomie und dem zu prothesierenden Zahn variable Abmessungen aufweist und Ausnehmungen, Anhänge, Formungen oder Bezugspunkten (32, 32 ') aufweist, die sich jeweils ausgehend von der Oberseite der Schulter (31) und von der Unterseite des unteren Abschnitts (28) erstrecken, und zur Bildung von Anti-Rotation- und - Reziprokation-Positionierungs- / Neupositionierungselementen des Kragens (20) in Bezug auf die Plattform / Oberfläche von dem Dentalimplantat (12) und den Stumpf (24) geeignet sind.

6. Dentalprothesenkomplex nach Anspruch 4, **dadurch gekennzeichnet, dass** das Loch oder die Öffnung (22) des transmukösen Kragens (20) einen oder mehrere Abschnitte aufweist, die entweder mit Gewinden oder Neupositionierungselementen versehen sind.

7. Zahnprothesenkomplex nach Anspruch 1, **dadurch gekennzeichnet, dass** der transmuköse Kragen (20) den austretenden Abschnitt (24 ") des Stumpfes (24) aufweist, der so integriert ist, dass er einen einzigen Körper mit dem transmukösen Kragen bildet

## Revendications

1. Kit pour prothèse dentaire améliorée (10) approprié pour éliminer la présence bactérienne à l'intérieur de celle-ci comprenant:
- un implant dentaire (12) adapté à l'ostéointégration, réalisé à base de titane ou autre matériau biologiquement compatible, adapté pour être inséré de manière permanente dans l'os mandibulaire ou maxillaire (14) normalement jusqu'au niveau de la crête osseuse (15) et comportant axialement un orifice aveugle (18),
- une collerette transmuqueuse (20), qui prolonge axialement l'implant dentaire à travers l'épaisseur de la gencive (16), adaptée pour être couplée axialement à l'implant dentaire (12) dans l'orifice aveugle (18) et comportant axialement un orifice traversant (22),
- un tronçon (24) adapté de manière à être couplé axialement à l'orifice aveugle (18) de l'implant dentaire (12) par l'intermédiaire de l'orifice traversant (22) de la collerette transmuqueuse (20) et comportant une partie émergente (24") par rapport au tissu de la gencive (16), approprié pour assurer le support d'une couronne artificielle (26) ou autre structure de prosthèse,
dans lequel la collerette transmuqueuse (20) est adaptée de manière à être couplée axialement audit implant dentaire (12) fixé préalablement à force au niveau d'une partie annulaire (50), définie entre la partie supérieure de l'implant dentaire (12) et la partie inférieure (28) de la collerette transmuqueuse (20), et dans lequel le tronçon (24) est adapté de manière à être inséré ultérieurement sur l'orifice aveugle (18) de l'implant (12) en commençant à partir de l'orifice traversant (22) de la collerette transmuqueuse (20) afin de former un ensemble monolithique qui est adapté de manière à être scellé mécaniquement et chimiquement, et stabilisé par un ciment (52) qui peut être positionné autour de la totalité de la partie inférieure (24') du tronçon (24), inséré dans lesdits orifices (22) et (18), et qui peut remplir entièrement les cavités formées entre ladite partie inférieure (24') et le fond de l'orifice aveugle (18), et prolongé axialement au moins jusqu'à l'orifice traversant (22) de la collerette transmuqueuse (20). formant un ensemble impénétrable par les fluides organiques et bactéries.

2. Ensemble de prothétisation dentaire selon la revendication 1, **caractérisé en ce que** l'orifice aveugle (18) de l'implant dentaire (12) comporte une ou plusieurs cavités s'étendant suivant une direction axiale.

3. Kit pour prothèse dentaire selon la revendication précédente, **caractérisé en ce que** l'orifice aveugle (18) de l'implant dentaire (12) présente une section transversale polygonale s'étendant partiellement sur ledit orifice ou sur la totalité de sa longueur.

4. Kit pour prothèse dentaire selon la revendication 1, **caractérisé en ce que**, sur la collerette transmuqueuse (20), réalisée à base de titane, de titane revêtu de zirconium ou de zirconium, la partie inférieure (28) présente une section transversale circulaire ou polygonale appropriée pour être insérée dans un orifice axial aveugle (18) de l'implant dentaire (12), et une partie supérieure ou partie transmuqueuse (30) s'étendant dans une direction verticale partant de la face supérieure de la partie inférieure (28) et tend à avoir une extension longitudinale avec une section transversale constante ou des sections transversales différenciées reliées par un point d'inflexion ou jointes, ou un cône tronqué ou une extension concave-convexe, ladite collerette transmuqueuse (20) comprenant en outre un rebord supérieur (31) ou épaulement de ladite partie transmuqueuse (30) avec une forme présentant un chanfrein à section transversale plate, courbe ou constante et ledit orifice traversant (22) qui présente une section transversale circulaire, polygonale ou mixte afin d'assurer l'insertion du tronçon (24) ou le couplage avec celui-ci.

5. Kit pour prothèse dentaire selon la revendication 4, **caractérisé en ce que** la collerette transmuqueuse (20) présente des dimensions variables en fonction de l'anatomie et de la dent à appareiller et comporte des encoches, appendices, formes ou références (32, 32') s'étendant respectivement en partant de la face supérieure de l'épaulement (31) et à partir de la face inférieure de la partie inférieure (28) et approprié pour constituer des éléments anti-rotation et à positionnement/repositionnement réciproque de la collerette (20) en rapport avec la plate-forme/surface de l'implant dentaire (12) et le tronçon (24).

6. Kit pour prothèse dentaire selon la revendication 4, **caractérisé en ce que** l'orifice ou ouverture (22) de la collerette transmuqueuse (20) comporte une ou plusieurs sections équipées soit de filetages soit d'éléments de repositionnement.

7. Kit pour prothèse dentaire selon la revendication 1, **caractérisé en ce que** la collerette transmuqueuse (20) intègre la partie émergente (24") du tronçon (24) de manière à définir un corps unique avec ladite collerette transmuqueuse.
